# EUROPÄISCHE PATENTSCHRIFT

(11) **EP 4 128 472 B1**
(45) Veröffentlichungstag und Bekanntmachung des Hinweises auf die Patenterteilung: **22.11.2023**
(21) Anmeldenummer: 21712434.6
(22) Anmeldetag: 10.03.2021
(51) Int. Cl.: H02J 7/00, H01M 8/18, H01M 10/42, H01M 10/44, H01M 8/24, H01M 8/04858

(54) **REDOX-FLOW-BATTERIE-SYSTEM UND BETRIEBSVERFAHREN**
REDOX FLOW BATTERY SYSTEM AND OPERATING METHOD
PROCÉDÉ DE FONCTIONNEMENT ET SYSTÈME DE BATTERIE À FLUX RÉDOX

(30) Priorität: 24.03.2020 DE 102020108068
(43) Veröffentlichungstag der Anmeldung: 08.02.2023
(73) Patentinhaber: Voith Patent GmbH, 89522 Heidenheim (DE)
(72) Erfinder: LÜTH, Thomas, 79104 Freiburg (DE)
(74) Vertreter: Voith Patent GmbH - Patentabteilung
(86) Internationale Anmeldenummer: PCT/EP2021/056031
(87) Internationale Veröffentlichungsnummer: WO 2021/190928

(56) Entgegenhaltungen:
- WO-A2-2011/154306
- DE-A1-102015 210 922
- JP-A- 2006 040 648
- KR-A- 20170 035 619
- KR-A- 20190 061 847
- BYRNE R ET AL: "Energy performance of an operating 50 kWh zinc-bromide flow battery system", 2015 IEEE INTERNATIONAL CONFERENCE ON ENGINEERING, TECHNOLOGY AND INNOVATION/ INTERNATIONAL TECHNOLOGY MANAGEMENT CONFERENCE (ICE/ITMC), IEEE, 22. Juni 2015 (2015-06-22), Seiten 1-6, XP032885898, DOI: 10.1109/ICE.2015.7438688 [gefunden am 2016-03-21]

## Beschreibung

Die Erfindung betrifft ein Redox-Flow-Batterie-System und ein Verfahren zum Betrieb eines solchen Systems. Die Erfindung betrifft insbesondere Redox-Flow-Batterie-Systeme mit einer hohen Ausgangsspannung. Das erfindungsgemäße Verfahren betrifft ein Verfahren zur Verringerung bzw. Eliminierung von während dem Laden und Entladen des Batterie-Systems auftretenden Ungleichgewichten zwischen in Serie geschalteten Batteriemodulen.

Um eine hohe Ausgangsspannung bei Redox-Flow-Batterie-Systemen zu erhalten, werden gewöhnlich mehrere Zellen elektrisch in Serie geschaltet. Diese Anordnung wird Stack genannt. Dies lässt sich jedoch nicht beliebig fortsetzen, da sonst der durch den Elektrolyt verursachte Nebenschlussstrom intolerabel hoch werden würde. Die Ausgangsspannung kann jedoch weiter erhöht werden, wenn mehrere Stacks in Serie geschaltet werden, wobei jeder Stack über eine separate Tankeinheit verfügt. Eine solche Einheit aus Stack und zugehöriger separater Tankeinheit wird Batteriemodul genannt. Aufgrund von Inhomogenität der verwendeten Rohmaterialien und Fertigungsschwankungen sind die einzelnen produzierten Batteriemodule jedoch nicht identisch, und daher leiden solche Batterie-Systeme darunter, dass es zu einen Ungleichgewicht unter den Batteriemodulen kommen kann, welches die Leistungsfähigkeit eines solchen Batterie-Systems nachteilig beeinflusst.

Aus dem Stand der Technik sind Batterie-Systeme und zugehörige Betriebsverfahren bekannt, welche ein solches schädliches Ungleichgewicht reduzieren können. Man spricht dabei gewöhnlich von einem Balancing.

Die WO 2020/030762 A1 beschäftigt sich mit dem Ungleichgewicht des Ladezustands der Batteriemodule (state of charge - SoC). Dabei werden die Ladezustände der einzelnen Elektrolyttanks gemessen und verglichen. Wenn der Unterschied der Ladezustände einen Schwellwert überschreitet, dann wird die Anzahl der in Serie geschalteten Zellen in den Stacks so angepasst, dass die weniger geladenen Elektrolyten durch weniger Zellen entladen werden, als die mehr geladenen Elektrolyten, bzw. dass die weniger geladenen Elektrolyten durch mehr Zellen geladen werden als die mehr geladenen Elektrolyten.

Auch die WO 2018/107097 A1 beschäftigt sich mit dem Ungleichgewicht des Ladezustands der Batteriemodule. Die Reduktion des Ungleichgewichts wird dadurch erreicht, dass nachdem die SoC-Werte gemessen wurden, der SoC-Wert eines Batteriemoduls dadurch an einen Ziel-SoC-Wert angeglichen wird, dass in wenigstens einem Modul ein Teil der gespeicherten Energie einer elektrischen Last zugeführt wird. Weiterer Stand der Technik wird in den Dokumenten JP 2006 040648 A, KR 2017 0035619 A, DE 10 2015 210922 A1, WO 2011/154306 A2 sowie im Artikel: BYRNE R ET AL: "Energy performance of an operating 50 kWh zinc-bromide flow battery system" (XP032885898,DOI: 10.1109/ICE.2015.7438688) beschrieben.

Der Erfinder hat sich die Aufgabe gestellt, ein Redox-Flow-Batterie-System und ein Betriebsverfahren anzugeben, wobei Ungleichgewichte in alternativer Weise reduziert werden können.

Die Aufgabe wird erfindungsgemäß durch ein Batterie-System und ein Betriebsverfahren gemäß den unabhängigen Ansprüchen gelöst. Weitere vorteilhafte Ausführungsformen finden sich in den Unteransprüchen.

Die Figuren zeigen im Einzelnen:
Fig.1 Batteriemodul
Fig.2 Batterie-System, welches nicht die kennzeichnenden Merkmale der Erfindung aufweist.
Fig.3 Batterie-System (Detail)
Fig.4 Batteriesystem welches nicht die kennzeichnenden Merkmale der Erfindung aufweist
Fig. 5 Batteriesystem welches nicht die kennzeichnenden Merkmale der Erfindung aufweist
Fig. 6 Erfindungsgemäßes Batteriesystem
Fig. 7 Erfindungsgemäßes Batteriesystem

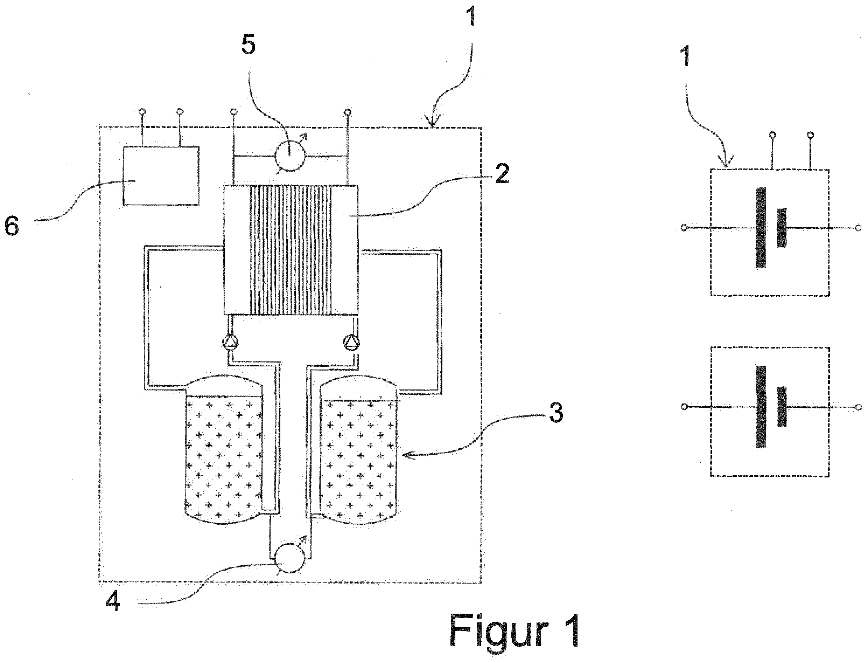

Figur 1 zeigt auf der linken Seite in schematischer Darstellung ein Batteriemodul. Das Batteriemodul ist mit 1 bezeichnet. Das Batteriemodul umfasst eine Zellanordnung, welche mit 2 bezeichnet ist, eine Tankeinrichtung, welche mit 3 bezeichnet ist, und eine Messeinrichtung zur Erfassung einer Regelgröße. Bei der Zellanordnung 2 handelt es sich um eine Anordnung von einer Vielzahl von Redox-Flow-Zellen, welche beliebig angeordnet sein können. Beispielsweise könnte es sich um einen einzelnen Zell-Stack, eine Serienschaltung von mehreren Stacks, eine Parallelschaltung von mehreren Stacks, oder um eine Kombination von Serien- und Parallelschaltung von mehreren Stacks handeln. In jeden Fall tragen alle Zellen der Zellanordnung 2 dazu bei, elektrische Energie beim Laden im Batteriemodul 1 zu speichern, bzw. elektrische Energie beim Entladen des Batteriemoduls 1 zu liefern. Die Tankeinrichtung 3 dient zum Speichern des Elektrolyten und zur Versorgung der Zellanordnung 2 mit Elektrolyt. Dazu umfasst die Tankeinrichtung 3 bis auf wenige Ausnahmen wenigstens zwei Tanks, ein Rohrsystem zur Verbindung der Tanks mit der Zellanordnung 2 und Pumpen zum Fördern des Elektrolyten. Figur 1 zeigt dabei zwei separate Pumpen. Genauso gut könnte der Elektrolyt mit einer Doppelkopfpumpe gefördert werden, d.h. mit zwei Pumpen, welche über einen gemeinsamen Motor angetrieben werden. Die Tankeinrichtung 3 ist dabei so ausgebildet, dass sie alle Zellen der Zellanordnung 2 mit Elektrolyt versorgen kann. Fördern die Pumpen also den Elektrolyten, so werden alle Zellen der Zellanordnung 2 von demselben durchströmt. Es tragen daher immer alle Zellen der Zellanordnung 2 zum Laden des Elektrolyten der Tankeinrichtung 3, bzw. immer alle Zellen der Zellanordnung 3 zum Entladen des Elektrolyten der Tankeinrichtung 3 bei, wenn das Batteriemodul 1 geladen bzw. entladen wird.

Das in Figur 1 dargestellt Batteriemodul 1 umfasst zwei Messeinrichtungen zur Bereitstellung einer Regelgröße. Dabei handelt es sich bei der Messeinrichtung, welche mit 4 bezeichnet ist, um eine Messeinrichtung zur Bereitstellung der sogenannte Leerlaufspannung (open circuit voltage - OCV). Der OCV-Wert ist ein Maß für den Ladezustand des Batteriemoduls (SoC). Die Messeinrichtung, welche mit 5 bezeichnet ist, ist eine Messeinrichtung zur Bereitstellung der Klemmenspannung der Zellanordnung 2 und damit auch des Batteriemoduls 1. Beim Laden bzw. Entladen des Batteriemoduls 1 unterscheidet sich die Klemmenspannung von der Leerlaufspannung um die Spannung, die über dem Innenwiderstand der Zellanordnung 3 abfällt. Alternativ zur OCV-Wert-Bestimmung ist das sogenannte Coulomb Counting, welches ebenfalls ein Maß für den Ladezustand des Batteriemoduls darstellt. Hierzu wird eine Messeinrichtung zur Bereitstellung des Stroms benötigt, welcher durch die in Serie geschalteten Module fließt. Eine solche Messeinrichtung für das Coulomb Counting könnte daher auch außerhalb der Batteriemodule 1 realisiert sein, so dass ein Batteriemodul 1 also optional eine Messeinrichtung zur Bereitstellung einer Regelgröße umfasst. In jedem Fall umfasst ein Batterie-System (s.u.) wenigstens eine Messeinrichtung zur Bereitstellung einer Regelgröße für jedes Batteriemodul 1 des Batterie-Systems.

Das Batteriemodul 1 umfasst ferner Hilfssysteme, welche durch das Rechteck mit der Bezeichnung 6 angedeutet werden. Die Hilfssysteme 6 werden über die beiden Klemmen von außerhalb des Batteriemoduls 1 mit Strom versorgt. Die Hilfssysteme 6 dienen u.a. zur Speisung der Pumpen, von eventuell vorhandenen Lüftungseinrichtung und dergleichen.

Auf der rechten Seite von Figur 1 sind symbolhafte Darstellungsweisen des Batteriemoduls 1 gezeigt. Dabei zeigt die obere Darstellungsweise neben den Klemmen der Zellanordnung auch noch die Klemmen der Hilfssysteme. Letztere fehlen in der unteren Darstellungsweise. Die symbolhaften Darstellungsweisen werden im Folgenden verwendet. Wenn dabei die untere Darstellungsweise verwendet wird, bedeutet das nicht, dass die dargestellten Batteriemodule keine Hilfssysteme umfassen würden, sondern nur, dass in dem jeweiligen Zusammenhang die Hilfssysteme keine Rolle spielen.

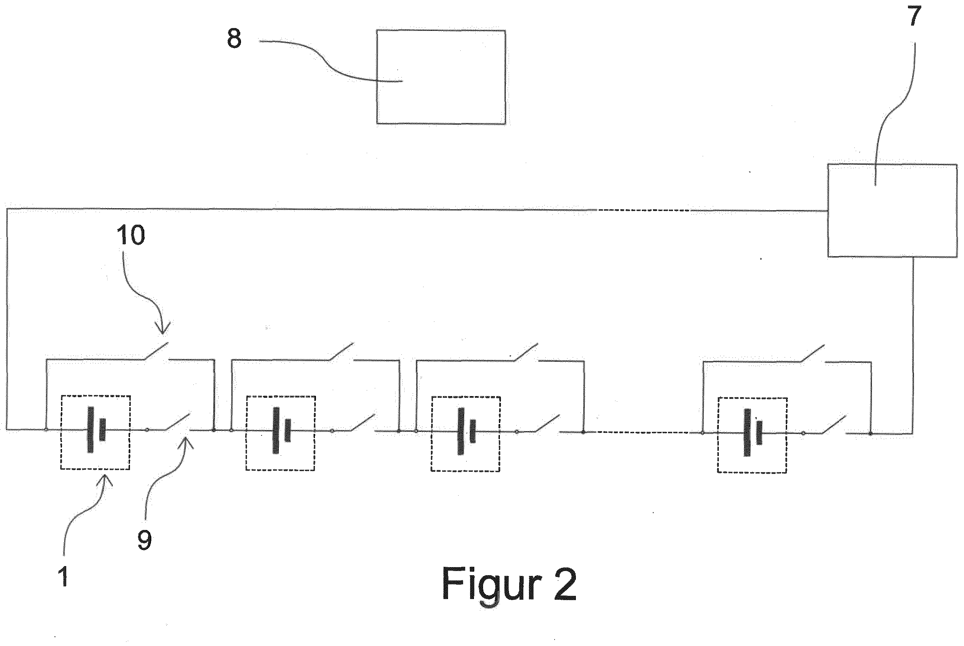

Figur 2 zeigt in schematischer Darstellung ein Batterie-System, welches nicht die kennzeichnenden Merkmale der Erfindung aufweist.

Das Batterie-System umfasst wenigstens zwei Batteriemodule, von denen eines mit 1 bezeichnet ist, einen bidirektionalen Umrichter (engl. bidirectional power conversion system - PCS), welche mit 7 bezeichnet ist, und eine Steuereinrichtung, welche mit 8 bezeichnet ist. Die Batteriemodule 1 sind in Serie geschaltet und mit dem Umrichter 7 verbunden. In Figur 2 sind vier Batteriemodule dargestellt, wobei die gestrichelten Linien in der Serien-Schaltung eine beliebige Anzahl von weiteren Modulen andeuten sollen. Der Umrichter 7 übernimmt die Anbindung des Batterie-Systems an das Netz oder an ein übergeordnetes elektrisches System. Das Batterie-System umfasst ferner für jedes Batteriemodul 1 einen ersten Schalter, von denen einer mit 9 bezeichnet ist, und einen zweiten Schalter, von denen einer mit 10 bezeichnet ist. Die ersten Schalter 9 sind jeweils in Serie zu den Batteriemodulen 1 angeordnet, wobei es natürlich unerheblich ist auf welcher Seite des jeweiligen Batteriemoduls der zugehörige Schalter 9 angeordnet ist. Die zweiten Schalter 10 sind jeweils in einer Umgehungsleitung (Bypass) um jeweils ein Batteriemodul 1 und den zugehörigen ersten Schalter 9 angeordnet. In Figur 2 sind alle Schalter 9 und 10 in geöffnetem Zustand dargestellt. In Realität werden die Schalter in fast allen erfindungsgemäßen Betriebsverfahren, welche in den folgenden Abschnitten im Detail beschrieben werden, durch die Steuereinrichtung 8 so angesteuert, dass von jedem Schalterpaar eines ersten und zweiten Schalters genau ein Schalter geschlossen und ein Schalter geöffnet ist (wechselweise geöffnet und geschlossen). D.h. ein Schalterpaar hat dabei genau zwei Schaltstellungen, wobei in der ersten Schaltstellung (erster Schalter 9 geschlossen und zweiter Schalter 10 geöffnet) das zugehörige Batteriemodul 1 sich in der Serienschaltung des Batterie-Systems befindet, und in der zweiten Schalterstellung (erster Schalter 9 geöffnet und zweiter Schalter 10 geschlossen) das zugehörige Batteriemodul 1 durch die Umgehungsleitung von der Serienschaltung des Batterie-Systems getrennt ist. Das Öffnen vom ersten Schalter 9 bei geschlossenen Schalter 10 verhindert dabei die Entladung des Moduls über die Umgehungsleitung. Die Steuereinrichtung 8 ist mit jedem Batteriemodul so verbunden, dass sie die Messwerte der Messeinrichtungen 4 bzw. 5 erfassen kann. Falls das Batterie-System eine oder mehrere Messeinrichtungen umfasst, welche nicht Teil der Batteriemodule 1 sind, dann ist die Steuereinrichtung natürlich auch mit diesen verbunden, um die Messwerte derselben erfassen zu können. Eine Messeinrichtung für das Coulomb Counting könnte beispielsweise auch ein Teil der Steuereinrichtung 8 sein. Außerdem ist die Steuereinrichtung 8 mit jedem der Schalter 9 und 10 so verbunden, dass dieselbe die jeweilige Schalterstellung bestimmen kann, um die Batteriemodule 1 in die Serien-Schaltung hinein- oder aus der Serien-Schaltung herauszuschalten. Diese Verbindungen können auch drahtlos erfolgen.

In einem Batterie-System gemäß Figur 2 mit vollkommen identischen Batteriemodulen 1 könnte sich kein schädliches Ungleichgewicht einstellen. Reale Batteriemodule 1 unterscheiden sich jedoch aufgrund von Fertigungsschwankungen und von Alterungsprozessen. Außerdem können unterschiedliche Betriebsbedingungen, z.B. Temperaturunterschiede, der einzelnen Module ein unterschiedliches Verhalten derselben verursachen. Aus diesen Gründen haben reale Batteriemodule unterschiedliche Effizienzwerte und unterschiedliche Innenwiderstände. Eine höhere Effizienz führt bei gegebenen Lade- bzw. Entladestrom zu einem schnelleren Erreichen des Endzustands des betreffenden Batteriemoduls. Da in der Serienschaltung gemäß Figur 2 alle Batteriemodule 1 vom selben Strom durchflossen werden, erreichen die Module mit hoher Effizienz den Endzustand schneller als die Module mit niedriger Effizienz. Zur Vermeidung von Schäden muss der Lade- bzw. Entladevorgang bereits jeweils dann abgebrochen werden, wenn ein Modul den jeweiligen Endzustand erreicht. Auf diese Weise verringert sich ohne ein Ausgleichen dieses Effekts die nutzbare Speicherkapazität eines solchen Batteriesystems mit jedem durchlaufenen Zyklus ("capacity fading"). Etwas Ähnliches bewirkt der unterschiedliche Innenwiderstand der Module. Für die Klemmenspannung existieren obere und untere Grenzwerte, welche nicht über bzw. unterschritten werden dürfen. Selbst bei identischer Effizienz erreicht ein Modul mit höherem Innenwiderstand beim Laden oder Entladen schneller den jeweiligen Grenzwert der Klemmenspannung als ein Modul mit geringerem Innenwiderstand. Wenn das erste Modul einen Grenzwert erreicht muss der jeweilige Vorgang abgebrochen werden, was so ebenfalls zu einer Verringerung der nutzbaren Kapazität des Batterie-Systems führt. Alternativ könnte auch die Leistung des Systems reduziert werden. In jedem Fall führen diese Effekte zu einer Beeinträchtigung des Systems. Balancing soll die beschriebenen Effekte verringern bzw. komplett beseitigen, um so die nutzbare Kapazität des Batterie-Systems dauerhaft auf hohem Niveau zu halten bzw. die beschriebene Beeinträchtigung zu beseitigen. Andererseits ermöglicht ein erfolgreiches Balancing die Verwendung von Zellen mit einer vergleichsweise hohen Streuung bzgl. Effizienz und/oder Innenwiderstand, was sich natürlich in reduzierten Gestehungskosten niederschlägt.

Im Folgenden wird ein nicht beanspruchtes Verfahren zum Verringerung von während dem Laden und Entladen des Batterie-Systems auftretenden Ungleichgewichten des in Figur 2 dargestellten Batterie-Systems angegeben, wobei alle genannten Schritte selbstverständlich während dem Laden bzw. Entladen des Batterie-Systems durchgeführt werden, d.h. das Laden bzw. Entladen wird dadurch nicht unterbrochen.

Das Verfahren zur Verringerung von während dem Laden und Entladen des Batterie-Systems auftretenden Ungleichgewichten in einer ersten Ausführungsform umfasst dabei folgende Schritte:
- Erfassen der Messwerte der Messeinrichtung zur Bereitstellung einer Regelgröße für jedes Batteriemodul 1 durch die Steuereinrichtung 8;
- Falls sich in einem ersten Zeitpunkt wenigstens ein Messwert eines ersten Batteriemoduls 1 von einem Messwert eines zweiten Batteriemoduls 1 unterscheidet:
   o Die Steuereinrichtung 8 kontrolliert die Anzahl der Batteriemodule 1, welche sich in der Serienschaltung befinden, um den Unterschied der Messwerte des ersten und zweiten Batteriemoduls 1 zu einem späteren zweiten Zeitpunkt zu verringern, wobei sich über den Zeitraum zwischen dem ersten und zweiten Zeitpunkt während dem Laden bzw. Entladen des Batterie-Systems eines der beiden Batteriemodule 1 weniger lange Zeit in der Serienschaltung befindet als das andere Batteriemodul 1.

Wenn ein Batterie-System mit einer Vielzahl von Batteriemodulen über einen ausreichend langen Zeitraum ohne Balancing betrieben wird, d.h. geladen oder entladen wird, dann stellt sich im Allgemeinen ein Zustand ein, bei dem die Messwerte der Regelgröße für jedes Batteriemodul eine statistische Verteilung darstellen. In jedem Fall ist dann die Bedingung erfüllt, dass sich wenigstens ein Messwert eines ersten Batteriemoduls 1 von einem Messwert eines zweiten Batteriemoduls 1 unterscheidet. Natürlich ist es Ziel des Balancings bei einem solchen System mit vielen Batteriemodulen die Bandbreite der Verteilung der Messwerte zu einem späteren Zeitpunkt möglichst zu verringern bzw. im Idealfall alle Messwerte vollständig aneinander anzugleichen. Das führt natürlich automatisch dazu, dass sich auch die Messwerte des ersten und zweiten Batteriemoduls zu dem späteren Zeitpunkt einander annähern. Erfindungsgemäß wird das dadurch erreicht, dass wenigstens ein Teil der Batteriemodule zeitweise aus der Serienschaltung des Batterie-Systems herausgeschaltet werden, wobei die herausgeschalteten Module in dieser Zeit nicht am Laden bzw. Entladen des Systems teilnehmen, wohingegen die in Serie verbleibenden Module daran teilnehmen.

Dabei ist darauf zu achten, dass nicht zu viele Batteriemodule zum gleichen Zeitpunkt aus der Serienschaltung herausgenommen werden, was beispielsweise zu einer Verringerung der an der PCS 7 anliegenden Spannung unter einen kritischen Grenzwert führen könnte, da sich diese Spannung aus der Summe der Klemmenspannungen aller in der Serien-Schaltung befindlichen Batteriemodule ergibt. Die Steuereinrichtung 8 kontrolliert die Anzahl der Batteriemodule 1, welche sich in der Serienschaltung befinden, daher auch in dieser Beziehung, d.h. um einen störungsfreien Betrieb des Batterie-Systems zu jedem Zeitpunkt zu gewährleisten. Neben der unteren Grenzspannung des Umrichters 7 können hierbei natürlich auch noch weitere Parameter und Randbedingungen berücksichtigt werden, wie z.B. die obere Grenzspannung des Umrichters 7.

Dazu kann die Steuereinheit 8 beispielsweise die an der PCS 7 anliegende Spannung überwachen und ein entsprechendes Schaltverhalten sicherstellen. Alternativ könnte auch direkt eine maximale Anzahl von Modulen definiert werden, welche gleichzeitig aus der Serienschaltung herausgenommen werden dürfen. Es ist auch denkbar, dass eine solche maximale Anzahl noch von weiteren Parametern abhängen kann, z.B. dem Ladezustand des Systems oder eines beliebigen Moduls. So könnte beispielsweise bei einem ersten Ladezustand das gleichzeitige Herausschalten von maximal n Modulen erlaubt sein, und bei einem zweiten Ladezustand das gleichzeitige Herausschalten von maximal m Modulen erlaubt sein, wobei n ungleich m ist. Weitere denkbare Parameter sind der Lade- oder Entladestrom oder die Leistung der PCS 7.

Man kann sich das Verfahren weiter verdeutlichen, wenn man bedenkt, dass beim Laden oder Entladen eines Batterie-Systems die Messwerte und damit die Werte der entsprechenden Regelgröße der Batteriemodule monoton einem Endwert zustreben. Die "Geschwindigkeit" dieses Strebens ist aber für die Batteriemodule unterschiedlich, so dass manche Module "vorauseilen" und andere "hinterherhinken". Ziel des Balancings ist es also, die "Wandergruppe" der Module zusammenzuhalten, obwohl jedes Modul mit einer anderen Geschwindigkeit voranschreitet. Die Steuereinrichtung erreicht dieses Ziel dadurch, dass die schnelleren Module von Zeit zu Zeit "Zwangspausen" einlegen müssen (zeitweise Herausnahme aus der Serienschaltung), während das langsamste Modul permanent voranschreitet. Dabei achtet die Steuereinrichtung darauf, dass zu keinem Zeitpunkt zu viele Module pausieren. Dabei hat die Steuereinrichtung zwei Stellgrößen: die Länge der Pausen und die Pausenhäufigkeit.

Es kann sinnvoll sein, dass für das beschriebene Verfahren Schwellwerte für die Abweichung der Messwerte verwendet werden. Ein erster Schwellwert könnte für das Einsetzen des erfindungsgemäßen Verfahrens definiert werden, d.h. ein Schwellwert, welchen der Unterschied zwischen dem Messwert des ersten Batteriemoduls und dem Messwert des zweiten Batteriemoduls zu einem ersten Zeitpunkt überschreiten muss, damit der Balancing-Mechanismus ausgelöst wird. Ein zweiter Schwellwert könnte für das Aussetzen Balancing-Mechanismus definiert werden, d.h. ein Schwellwert, welchen der Unterschied zwischen dem Messwert des ersten Batteriemoduls und dem Messwert des zweiten Batteriemoduls zu einen späteren zweiten Zeitpunkt unterschreiten muss, damit der Balancing-Mechanismus zu diesem zweiten Zeitpunkt ausgesetzt wird. Es ist klar, dass der zweite Schwellwert kleiner als der erste Schwellwert gewählt werden muss. Insbesondere ist der zweite Schwellwert nützlich, um den negativen Einfluss von Messungenauigkeiten auszuschließen. Alternativ könnten die Messwerte natürlich auch mit einem geeigneten Filter von Rauschen befreit werden.

Das Verfahren kann aber genauso gut ohne Schwellwerte ausgeführt werden. Zum Beispiel indem man sich zunutze macht, dass man Erfahrungswerte für die Zeitdauer bestimmen kann, nachdem ein gegebenes Batterie-System bei einem gegeben Lade- bzw. Entladeprozess aus dem Gleichgewicht läuft, so dass ein ausgleichender Eingriff notwendig wird. Dasselbe gilt für die Zeitdauer, über welchen der erfindungsgemäße Balancing-Mechanismus ausgeführt werden muss, um ein gegebenes Batterie-System bei einem gegeben Lade- bzw. Entladeprozess wieder ins Gleichgewicht zu bringen. Vorteilhaft kann die Steuereinheit eines gegebenen Batterie-Systems mit Hilfe eines geeigneten Algorithmus diese Erfahrungswerte selbstlernend beim Durchlaufen von einigen wenigen Lade/Entlade-Zyklen gewinnen. Genauso können die Erfahrungswerte angepasst werden, falls sich das Batterie-System beispielsweise aufgrund von Alterungseffekten über einen längeren Betriebszeitraum in dieser Beziehung ändern sollte. Genauso können die Eigenheiten der einzelnen Batteriemodule 1 bestimmt werden, d.h. welche Batteriemodule mit hoher Effizienz arbeiten bzw. mit einem hohen Innenwiderstand behaftet sind, um so festzulegen, welche Batteriemodule erfahrungsgemäß häufiger und/oder länger pausieren müssen, um die "Wandergruppe" beieinander zu halten (siehe auch unten). Bei der Verwendung von solchen Erfahrungswerten besteht daher keine Notwendigkeit für die permanente Erfassung bzw. Auswertung der Messwerte der Regelgrößen. Analoges gilt für eine modellbasierte Herangehensweise, bei der das Verhalten der Batteriemodule mit Hilfe eines Modells vorhergesagt werden können. Dabei kann das Modell mit Hilfe von Messgrößen und geeigneten Parametern an das jeweilige Batterie-System angepasst werden.

Es ist auch denkbar, dass der Balancing-Mechanismus zumindest über einen gewissen Zeitraum ohne die weitere Erfassung bzw. Auswertung von Messwerten durchgeführt wird, indem die schnelleren Module fortwährend entsprechend lange bzw. häufige Pausen einlegen. Damit werden sozusagen fortwährend entstehende Ungleichheiten umgehend korrigiert, ohne dass die Unterschiede der Regelgröße permanent erfasst bzw. ausgewertet werden. Natürlich spricht auch nichts dagegen, dieses fortwährende Balancing unter einer fortwährenden Erfassung und Auswertung der Messwerte durchzuführen.

Die jeweilig notwendige Pausenlänge und Pausenhäufigkeit wird bei den Varianten des Verfahrens, welche ohne die permanente Erfassung bzw. Auswertung der Messwerte der Regelgrößen auskommen, für jedes Batteriemodul einmal oder zu späteren Zeitpunkten erneut festgelegt. Auch dazu kann ein selbstlernender Algorithmus oder oder ein modellgestütztes Verfahren verwendet werden. Man könnte diesen Vorgang und auch die Bestimmung der oben beschriebenen Erfahrungswerte für die genannten Zeitdauern als Kalibrierung des Balancing-Mechanismus bezeichnen. Eine solche Kalibrierung könnte bereits im Werk, d.h. noch vor Auslieferung an den Kunden erfolgen, oder auch bei der ersten Initialisierung. Zumindest während dieser Kalibrierung ist es notwendig, dass das Verfahren in der oben angegeben Form ausgeführt wird (d.h. mit Erfassung und Auswertung der Messwerte). In den Fällen, wo der Balancing-Mechanismus ohne Erfassung bzw. Auswertung der Messwerte ausgeführt wird, empfiehlt es sich, wenn wenigstens von Zeit zu Zeit der Erfolg des Balancings anhand der Messwerte überprüft wird. In Falle eines ungenügenden Balancings kann dann erneut kalibriert werden.

Die allgemeinste Form des Verfahrens (d.h. die Durchführung des Balancing-Mechanismus - BM) kann also folgendermaßen definiert werden:
Verfahren zur Verringerung von während dem Laden und Entladen des Batterie-Systems auftretenden Ungleichgewichten umfassend den Schritt (BM):
- Die Steuereinrichtung 8 kontrolliert die Anzahl der Batteriemodule 1, welche sich in der Serienschaltung befinden, um den Unterschied eines ersten und zweiten Batteriemoduls 1 hinsichtlich einer Regelgröße zu verringern, wobei sich über einen Zeitraum während dem Laden bzw. Entladen des Batterie-Systems eines der beiden Batteriemodule 1 weniger lange Zeit in der Serienschaltung befindet als das andere Batteriemodul 1.

Eine Überwachung der Messwerte der Regelgrößen ist jedoch zumindest zeitweise notwendig, um ein Abbruchkriterium für den Lade- bzw. Entladevorgang des Batterie-Systems zu gewinnen. Bei erfolgreichem Balancing genügt dafür jedoch die Überwachung der Messwerte von einem einzigen belieben Modul.

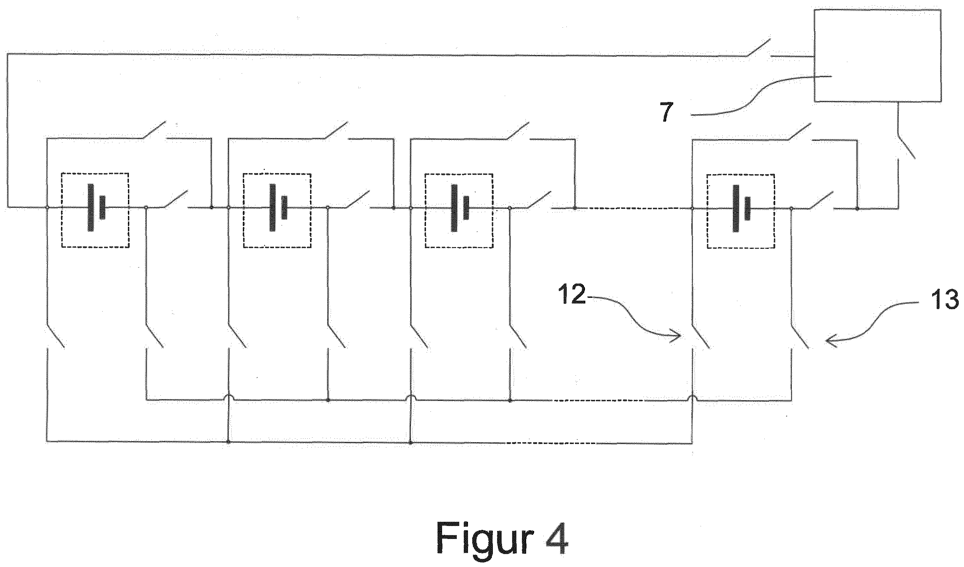

An dieser Stelle sei angemerkt, dass die WO 2020/030762 A1 in Figure 4 eine Anordnung analog zur der Anordnung von Figur 2 der vorliegenden Anmeldung offenbart, wobei die Schalter 1221 und 1222, welche als äußere Stromkreis-Schalter ("outer circuit switches") bezeichnet werden, dem ersten und zweiten Schalter (9, 10) der vorliegenden Anmeldung entsprechen. Allerdings gibt die WO 2020/030762 A1 als Verwendungszweck der äußeren Stromkreis-Schalter 1221 und 1222 an, dass dieselben für seltene Eventualitäten verwendet werden, wie z.B. beim Lecken der Elektrolyt-Tanks oder beim Austausch des Elektrolyten (,The latter switching is likely to be infrequent and for eventualities such as elecrolyt leakage or replacement" - siehe letzter Satz der Beschreibung). Die WO 2020/030762 A1 offenbart daher weder das oben beschriebene Verfahren noch legt es dasselbe nahe.

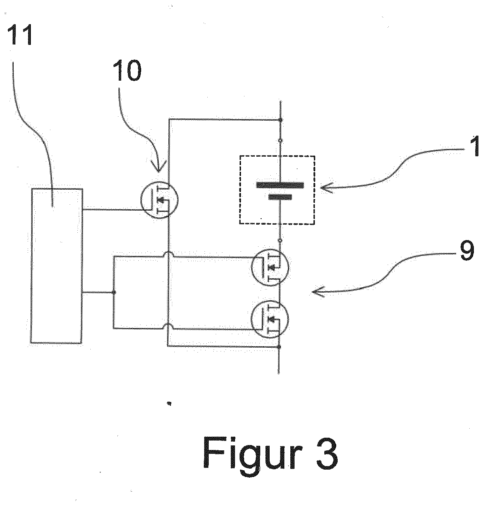

Das oben dargestellte Verfahren lässt sich besonders vorteilhaft ausführen, wenn der erste und der zweite Schalter des oben im Zusammenhang mit Figur 2 beschriebenen Batterie-Systems mit Hilfe von Halbleitertransistoren ausgeführt werden. Figur 3 zeigt eine Schalterausführung mit Halbleitertransistoren in einer besonders vorteilhaften Variante, wobei die Figur 3 lediglich ein Batterie-Modul und die zugehörigen Schalter zeigt. Alle anderen Batterie-Module samt zugehörigen Schaltern des Batterie-Systems sind in dieser Variante entsprechend ausgeführt.

Der erste Schalter 9 umfasst zwei normal sperrende MOSFETs, deren Kanäle so in Serie geschaltet sind, dass in beiden Stromrichtungen immer eine der Reversdioden sperrt, wobei die Reversdioden in Figur 3 der Übersichtlichkeit halber nicht eingezeichnet sind. Der zweite Schalter 10 umfasst ein normal sperrendes MOSFET. Das Batterie-System umfasst wenigstens eine Schalteinheit, welche in Figur 3 mit 11 bezeichnet ist. Die Gate-Anschlüsse der MOSFETs sind mit der Schalteinheit 11 verbunden, wobei die Gate-Anschlüsse der beiden MOSFETs vom ersten Schalter 9 auch miteinander verbunden sind, so dass die Ansteuerung dieser Gates immer simultan erfolgt. Die genannte Verbindung der Gates kann auch entfallen, falls die Schalteinheit 11 intern eine simultane Ansteuerung der betreffenden Gates gewährleistet. Es kann für jedes Schalterpaar (9, 10) jeweils eine Schalteinheit 11 vorgesehen sein, oder eine Schalteinheit 11 bedient mehrere Schalterpaare (9, 10) oder auch alle. In den beiden letzten Fällen muss die Schalteinheit 11 natürlich entsprechend viele unabhängige Anschlüsse aufweisen, so dass die verbunden Schalterpaare unabhängig voneinander geschaltet werden können. Die Schalteinheit 11 bzw. Schalteinheiten 11 können integraler Bestandteil der Steuereinrichtung 8 sein.

Die Verwendung von MOSFETs ermöglicht die verschleißfreie und schnelle Ausführung der für das oben beschriebene Verfahren notwendigen Schaltvorgänge, was insbesondere von Vorteil ist, wenn zum Balancing häufige aber kurze Pausen verwendet werden. Dabei verhindert die erfindungsgemäße Anordnung der MOSFETs das ungewollte Entladen eines Batteriemoduls während der Zeit, in der es sich nicht in der Serien-Schaltung befindet, und daher nicht am Laden bzw. Entladen des Batterie-Systems teilnimmt. Optional kann jeder der Schalter 9 und 10 zusätzlich ein Relais umfassen, welches parallel zu den MOSFETs angeordnet ist. Dadurch können die jeweiligen Schalter auch verlustfrei mit den Relais betätigt werden, was dann von Vorteil ist, wenn der betreffende Schalter nur selten betätigt werden soll.

Es ist zu erwähnen, dass in Figur 3 die MOSFETs in der Ausführung als n-Kanal MOSFETs dargestellt sind. Die Anordnung ist jedoch nicht auf solche MOSFETs beschränkt. Genauso gut können p-Kanal MOSFETs verwendet werden.

Figur 4 zeigt ein ebenfalls nicht beanspruchtes Batterie-System in einer weiteren Variante. Das Batterie-System umfasst für jedes Batteriemodul zusätzlich einen dritten und vierten Schalter, welche mit 12 und 13 bezeichnet sind, und Leitungen, wobei die zusätzlichen Schalter und die Leitungen so miteinander und den Batteriemodulen verbunden sind, dass alle Batteriemodule parallel geschaltet sind, wenn alle zusätzlichen Schalter geschlossen sind. Dazu müssen natürlich alle ersten und zweiten Schalter geöffnet werden. Die Parallelschaltung der Batteriemodule führt zur Angleichung der Klemmenspannungen der Module, wobei Ausgleichströme zwischen den Batteriemodulen fließen. Die gezeigte Parallelschaltung kann daher zum Balancing eingesetzt werden. Dabei können alle Module oder auch nur einige, d.h. wenigstens zwei Module, z.B. das jeweils schnellste und langsamste, für einen definierten Zeitraum parallel geschaltet werden. Auch die zusätzlichen Schalter werden von der Steuereinrichtung betätigt, welche in Figur 4 aus Platzgründen nicht dargestellt ist.

Im Prinzip könnten die Batteriemodule durch die PCS 7 auch in Parallelschaltung geladen oder entladen werden. Dazu ist allerdings bei einem gattungsgemäßen Hochspannungs-Batterie-System die PCS 7 in der Regel nicht ausgelegt, so dass ein Balancing durch Parallelschalten nicht während dem Laden bzw. Entladen ausgeführt werden kann.

Figur 4 zeigt auch noch zwei zusätzliche Schalter, mit denen die PCS 7 von den verschalteten Batteriemodulen getrennt werden kann. Dies kann von Vorteil sein. Gegebenenfalls kann auch nur ein Trennschalter verwendet werden. Ein solcher Schalter bzw. solche Schalter können bei allen anderen Varianten ebenfalls zum Einsatz kommen.

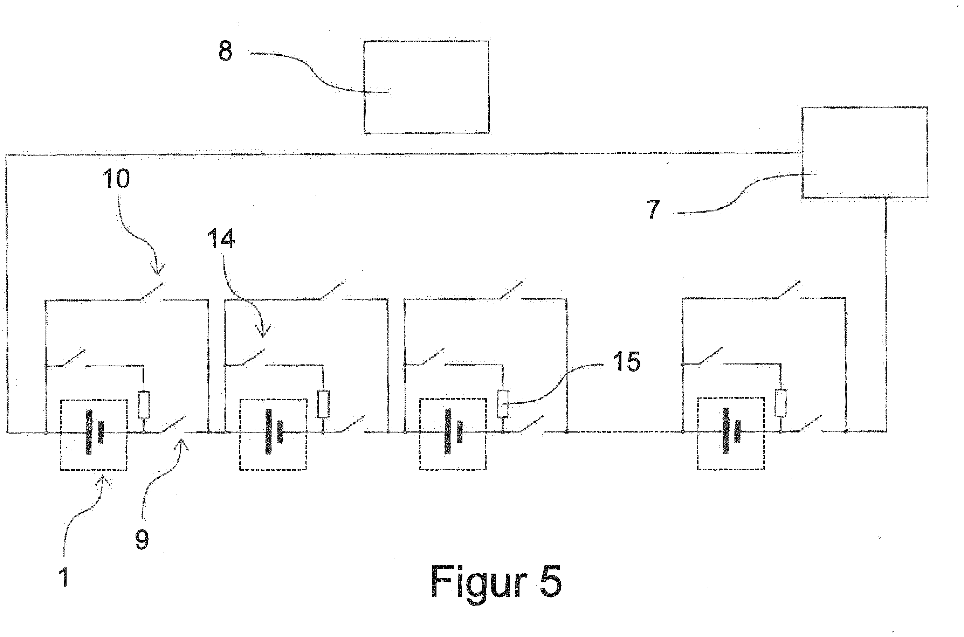

Figur 5 zeigt ein weiteres nicht beanspruchtes Batterie-System. Das Batterie-System umfasst für jedes Batteriemodul 1 zusätzlich einen weiteren fünften Schalter, von welchen einer mit 14 bezeichnet ist. Es sei erwähnt, dass die Benennung als "fünfter" Schalter lediglich der Klarheit dient, und nicht impliziert, dass wenn ein Batterie-System einen fünften Schalter umfasst, es damit auch automatisch einen dritten und vierten Schalter umfassen müsste. Ferner umfasst das Batterie-System für jedes Batteriemodul 1 einen Widerstand, von denen einer mit 15 bezeichnet ist. Der fünfte Schalter 14 und der Widerstand 15 sind dabei jeweils in einer weiteren Bypass-Leitung um je ein Batteriemodul 1 so angeordnet, dass je ein Batteriemodul 1 über einen Widerstand 15 kurzgeschlossen wird, wenn der zugehörige fünfte Schalter 14 geschlossen wird. Auch die fünften Schalter 14 werden von der Steuereinrichtung 8 betätigt. Mit Hilfe der Anordnung von Figur 5 kann jedes Batteriemodul über einen fünften Widerstand selektiv entladen werden. Werden einer oder mehrere der fünften Schalter 14 während dem Laden oder Entladen des Batterie-Systems geschlossen, so fließt ein Teil des Lade- bzw. Entladestroms an dem jeweiligen Batteriemodul 1 vorbei. Dies kann zum Balancing benutzt werden. Allerdings ist diese Art des Balancings mit dem Verlust von elektrischer Leistung verbunden und wird daher nur als zusätzliche Balancing-Methode zu den anderen Methoden verwendet, so dass das Balancing durch diese zusätzliche Möglichkeit weiter flexibilisiert und verbessert werden kann. Da auf diese Art in den Widerständen Wärme freigesetzt wird, kann die Schaltung der fünften Schalter vorteilhaft gepulst erfolgen, um eine übermäßige Erhitzung zu vermeiden.

Wenn die ersten und zweiten Schalter 9, 10 gemäß Figur 3 ausgeführt sind, ergibt sich eine alternative Möglichkeit, den gerade beschriebenen Effekt zu erzielen. Dadurch dass die MOSFETs einen endlichen Kanalwiderstand haben, kann ein Batteriemodul auch einfach durch das gleichzeitige Schließen der ersten und zweiten Schalter 9, 10 selektiv über den Kanalwiderstand dieser Schalter kurzgeschlossen werden. In dieser Variante sind daher die genannten Schalter nicht in jedem Fall wechselweise geöffnet und geschlossen, wie oben beschrieben. Dabei stellen die beiden Schalter 9 und 10 gemeinsam de facto den fünften Schalter 14 dar. Den Zustand in dem beide Schalter 9 und 10 gleichzeitig geschlossen sind, könnte man auch so umschreiben, dass das zugehörige Batteriemodul "teilweise" aus der Serienschaltung herausgenommen ist, da nur noch eine Teil des Lade- bzw. Entladestroms durch das Modul fließt und der andere Teil um das Modul herum. Die Phrase "Die Steuereinrichtung 8 kontrolliert die Anzahl der Batteriemodule 1, welche sich in der Serienschaltung befinden" ist daher auch dahingehend zu verstehen, dass sich ein Modul teilweise in der Serienschaltung befinden kann. Auch in diesem Fall gilt das, was oben in Bezug auf die Wärmeentwicklung gesagt wurde.

Die folgenden Ausführungen betreffen die Erfindung. Sie kann mit den oben beschriebenen Varianten vorteilhaft kombiniert werden.

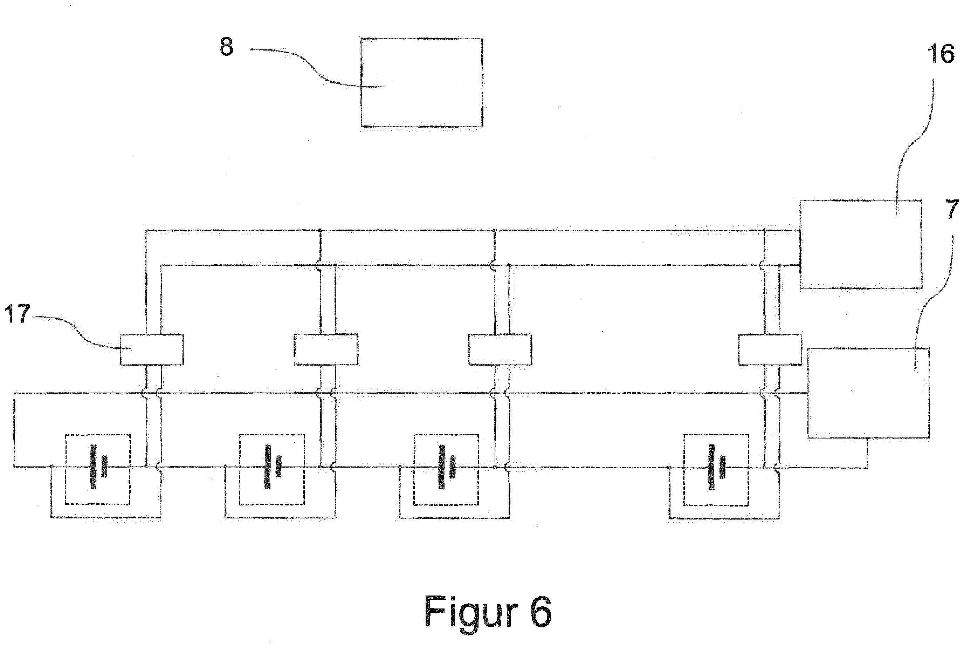

Figur 6 zeigt ein erfindungsgemäßes Batterie-System. Das Batterie-System umfasst wenigstens zwei Batteriemodule, einen bidirektionalen Umrichter 7, eine Steuereinrichtung 8, und für jedes Batteriemodul einen Gleichspannungswandler, von denen einer mit 17 bezeichnet ist. Die Batteriemodule sind in Serie geschaltet und mit dem Umrichter 7 verbunden. Ein Anschluss der Gleichspannungswandler 17 ist jeweils mit einem Batteriemodul verbunden, und ein zweiter Anschluss der Gleichspannungswandler 17 ist jeweils mit einem gemeinsamen Gleichstrombus verbunden.

Die Gleichspannungswandler können dabei unidirektional oder bidirektional ausgeführt sein. Je nach Ausführungsart und Orientierung können die Gleichspannungswandler 17 entweder elektrische Energie kontrolliert vom Gleichstrombus entnehmen oder demselben zuführen oder beides.

Das Batterie-System umfasst ferner einen weiteren Umrichter, welcher mit 16 bezeichnet ist. Der Umrichter 16 ist mit dem Gleichstrombus verbunden. Die Steuereinrichtung 8 ist mit dem Umrichter 16 und mit den Gleichspannungswandlern 17 so verbunden, dass die Steuereinrichtung 8 den Umrichter 16 und die Gleichspannungswandler 17 steuern kann. Der Umrichter 7 ist mit dem Netz oder einem anderen übergeordneten elektrischen System verbunden. Der weitere Umrichter 16 kann ebenfalls mit dem Netz oder einem anderen übergeordneten elektrischen System verbunden sein, oder optional als DC/DC Steller ausgebildet und mit dem Umrichter 7 verbunden sein. Im letzteren Fall nimmt der Umrichter 16 Leistung von Umrichter 7 auf, oder gibt Leistung an denselben ab. Der weitere Umrichter 16 ist unidirektional oder bidirektional ausgeführt.

Wie auch oben beschrieben sorgt der Umrichter 7 dafür, dass ein Lade bzw. Entladestrom durch die in Serie geschalteten Batteriemodule fließen kann, so dass dabei dieselben auf- bzw. entladen werden können. Die zu jedem Batteriemodul parallelgeschalteten Gleichspannungswandler 17 ermöglichen es nun, dass beim Laden für jedes Batteriemodul gezielt und kontrolliert wenigstens ein Teil des vom Umrichter 7 gelieferten Stroms um dasselbe herumgeleitet wird. Der betreffende Gleichspannungswandler 17 überträgt in diesem Fall elektrische Energie auf den Gleichstrombus. Dadurch wird das betreffende Batteriemodul in dem Zeitraum, in welchem der betreffende Gleichspannungswandler 17 so betrieben wird, weniger schnell bzw. gar nicht geladen. Beim Entladen kann ein oder können mehrere Gleichspannungswandler 17 so angesteuert werden, dass dieselben elektrische Energie vom Gleichstrombus auf das zugehörige Batteriemodul übertragen. Dabei wird der betreffende Gleichspannungswandler 17 jeweils so angesteuert, dass dadurch das zugehörige Batteriemodul in dem Zeitraum, in welchem der betreffende Gleichspannungswandler 17 so betrieben wird, weniger schnell oder überhaupt nicht entladen wird.

Es ist dabei klar, dass unidirektionale Gleichspannungswandler je nach Orientierung entweder nur beim Laden oder nur beim Entladen wie gerade beschrieben wirken können. Bidirektionale Gleichspannungswandler können natürlich sowohl beim Laden als auch beim Entladen wirken.

Der weitere Umrichter 16 versorgt dabei den Gleichstrombus mit elektrischer Energie bzw. führt überschüssige Energie von demselben ab. Im Falle, dass der weitere Umrichter 16 unidirektional ausgeführt ist, sind natürlich nicht alle genannten Energieflüsse möglich.

Die Anordnung gemäß Figur 6 ermöglicht das folgende Verfahren zur Verringerung von während dem Laden und Entladen des Batterie-Systems auftretenden Ungleichgewichten umfassend wenigstens einen der folgenden Schritte:
- Beim Laden des Batterie-Systems werden die Gleichspannungswandler 17 durch die Steuereinrichtung 8 zur Verringerung des Unterschieds eines ersten und zweiten Batteriemoduls hinsichtlich einer Regelgröße so angesteuert, dass ein Gleichspannungswandler 17 so viel elektrische Energie auf den Gleichstrombus überträgt, dass dadurch eines der beiden Batteriemodule weniger schnell geladen wird als das andere Batteriemodul.
- Beim Entladen des Batterie-Systems werden die Gleichspannungswandler 17 durch die Steuereinrichtung 8 zur Verringerung des Unterschieds eines ersten und zweiten Batteriemoduls 1 hinsichtlich einer Regelgröße so angesteuert, dass ein Gleichspannungswandler 17 so viel elektrische Energie vom Gleichstrombus abführt, dass dadurch eines der beiden Batteriemodule weniger schnell entladen wird als das andere Batteriemodul.

Die Anordnung gemäß Figur 6 ermöglicht außerdem, jedenfalls wenn der Umrichter 16 über einen separaten Netzanschluss verfügt, dass derselbe den Umrichter 7 beim Laden bzw. Entladen der Batteriemodule unterstützt. Das ist insbesondere dann vorteilhaft, wenn der Umrichter 7 an seine Leistungsgrenzen stößt. Da diese Unterstützung durch die Gleichspannungswandler 17 auch selektiv für jedes Batteriemodul geschehen kann, kann dies natürlich auch für das Balancing verwendet werden. Im Gegensatz von den bisher beschriebenen Balancing-Methoden führt dieser Mechanismus zu einem beschleunigten Laden bzw. Entladen der "langsamen" Module.

In einer weiteren Ausführungsform umfasst ein erfindungsgemäßes Verfahren zur Verringerung von während dem Laden und Entladen des Batterie-Systems auftretenden Ungleichgewichten zusätzlich einen der folgenden Schritte:
- Beim Laden des Batterie-Systems werden die Gleichspannungswandler 17 durch die Steuereinrichtung 8 zur Verringerung des Unterschieds eines ersten und zweiten Batteriemoduls hinsichtlich einer Regelgröße so angesteuert, dass ein Gleichspannungswandler 17 so viel elektrische Energie vom Gleichstrombus abführt, dass dadurch eines der beiden Batteriemodule schneller geladen wird als das andere Batteriemodul.
- Beim Entladen des Batterie-Systems werden die Gleichspannungswandler 17 durch die Steuereinrichtung 8 zur Verringerung des Unterschieds eines ersten und zweiten Batteriemoduls 1 hinsichtlich einer Regelgröße so angesteuert, dass ein Gleichspannungswandler 17 so viel elektrische Energie auf den Gleichstrombus überträgt, dass dadurch eines der beiden Batteriemodule schneller entladen wird als das andere Batteriemodul.

Falls mehrere erfindungsgemäße Batterie-Systeme nahe beieinander betrieben werden, dann können natürlich mehrere Systeme gemeinsam den weiteren Umrichter 16 und den verbundenen Gleichstrombus nutzen. Da je ein Gleichspannungswandler für je ein Batteriemodul vorhanden sein muss, ergibt sich bzgl. der Gleichspannungswandler keine Einsparmöglichkeit bei der Nutzung von mehreren parallel betriebenen Batterie-Systemen.

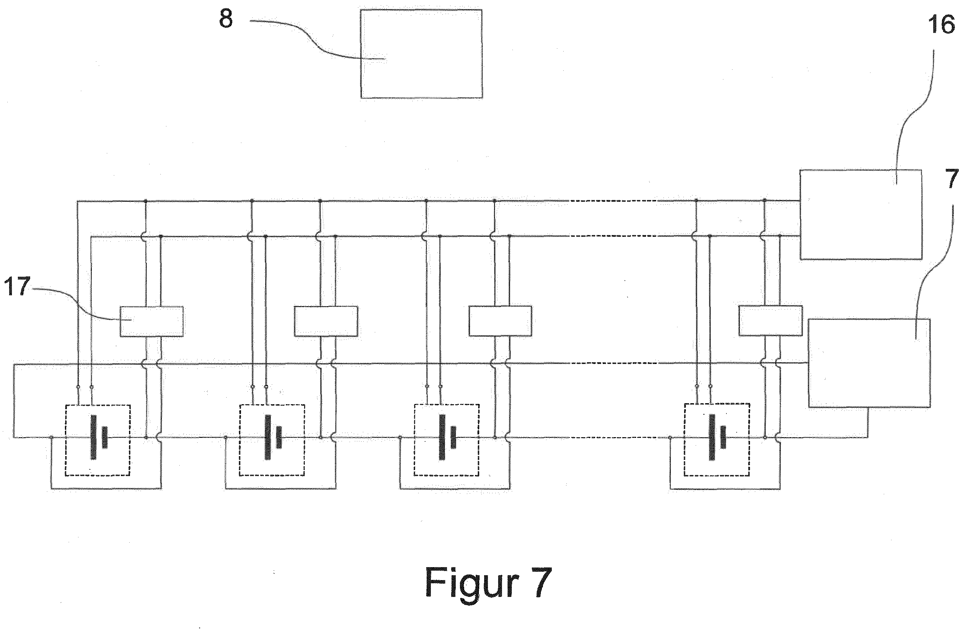

Figur 7 zeigt ein erfindungsgemäßes Batterie-System in einer weiteren Ausführungsform. Der einzige Unterschied zum Batterie-System gemäß Figur 6 besteht darin, dass die Hilfssysteme mit dem Gleichstrombus verbunden sind und durch diesen gespeist werden. Auf diese Weise ergibt sich für den Gleichstrombus ein Zusatznutzen, der an anderer Stelle Kosten einspart. Auch die gemeinsame Nutzung des Gleichstrombusses und des weiteren Umrichters zur Speisung der Hilfssysteme von mehreren parallel betriebenen Batterie-Systemen ist vorteilhaft und problemlos möglich.

Auch für die Ausführungsformen der Erfindung ist ein Kalibrierungsschritt in analoger Weise, wie oben im Detail beschrieben, vorteilhaft. Alle Maßnahmen sind jedoch natürlich auf die unterschiedliche Geschwindigkeit beim Laden bzw. Entladen der einzelnen Module zu beziehen, und auf die Zeitdauer in der eine unterschiedliche Geschwindigkeit zur Anwendung kommt. Dasselbe gilt auch hinsichtlich den dort gemachten Aussagen bzgl. der Durchführung des Verfahrens mit und ohne Erfassung und Auswertung der die Regelgrößen betreffenden Messwerte.

Damit ein Redox-Flow-Batterie-System eingerichtet ist, die oben beschriebenen Verfahrensschritte automatisiert auszuführen, umfasst es ein Computersystem. Der Begriff Computersystem bezeichnet alle Einrichtungen, die geeignet sind, die beschriebenen Verfahrensschritte automatisiert durchzuführen, insbesondere auch besonders dafür entwickelte ICs oder Mikrocontroller, sowie ASICs (ASIC: application specific integrated circuit). Dabei kann die Steuereinrichtung 8 selbst ein geeignetes Computersystem umfassen. Alternativ kann das Computersystem auch eine separate Einrichtung darstellen oder Teil einer separaten Einrichtung sein. Die vorliegende Anmeldung ist auch auf ein Computerprogramm gerichtet, welches Befehle umfasst, die bewirken, dass das Batterie-System die oben beschriebenen Verfahrensschritte ausführt. Außerdem ist die vorliegende Anmeldung auf ein computerlesbares Medium gerichtet, auf dem ein solches Computerprogramm gespeichert ist.

### Bezugszeichenliste

- 1: Batteriemodul
- 2: Zellanordnung
- 3: Tankeinrichtung
- 4: Messeinrichtung zur Bestimmung der OCV
- 5: Messeinrichtung zur Bestimmung der Klemmenspannung
- 6: Hilfssysteme
- 7: Bidirektionaler Umrichter (PCS)
- 8: Steuereinrichtung
- 9: Erster Schalter
- 10: Zweiter Schalter
- 11: Schalteinheit
- 12: Dritter Schalter
- 13: Vierter Schalter
- 14: Fünfter Schalter
- 15: Widerstand
- 16: Weiterer bidirektionaler Umrichter
- 17: Gleichspannungswandler

## Patentansprüche

1. Verfahren zur Verringerung von während dem Laden und Entladen eines Redox-Flow-Batterie-Systems auftretenden Ungleichgewichten, wobei das Batterie-System wenigstens zwei Batteriemodule (1), einen bidirektionalen Umrichter (7) und eine Steuereinrichtung (8) umfasst, und wobei die Batteriemodule (1) in Serie geschaltet und mit dem Umrichter (7) verbunden sind, und wobei jedes Batteriemodul (1) eine Zellanordnung (2) mit einer Vielzahl von Redox-Flow-Zellen und eine Tankeinrichtung (3) zum Speichern von Elektrolyt und zur Versorgung der Zellanordnung (2) mit Elektrolyt umfasst, **dadurch gekennzeichnet, dass** das Batterie-System für jedes Batteriemodul (1) einen Gleichspannungswandler (17) umfasst, wobei jeweils ein Anschluss von jedem Gleichspannungswandler (17) mit jeweils einem Batteriemodul (1) verbunden, und ein zweiter Anschluss von jedem Gleichspannungswandler (17) mit einem gemeinsamen Gleichstrombus verbunden ist, und wobei das Batterie-System einen weiteren Umrichter (16) umfasst, welcher mit dem Gleichstrombus verbunden ist, und wobei die Steuereinrichtung (8) so mit dem weiteren Umrichter (16) und mit den Gleichspannungswandlern (17) verbunden ist, dass die Steuereinrichtung (8) den weiteren Umrichter (16) und die Gleichspannungswandler (17) steuern kann, und wobei das Verfahren wenigstens einen der folgenden Schritte umfasst:
- Beim Laden des Batterie-Systems werden die Gleichspannungswandler (17) durch die Steuereinrichtung (8) zur Verringerung des Unterschieds eines ersten und zweiten Batteriemoduls (1) hinsichtlich einer Regelgröße so angesteuert, dass ein Gleichspannungswandler (17) so viel elektrische Energie auf den Gleichstrombus überträgt, dass dadurch eines der beiden Batteriemodule (1) weniger schnell geladen wird als das andere Batteriemodul (1);
- Beim Entladen des Batterie-Systems werden die Gleichspannungswandler (17) durch die Steuereinrichtung (8) zur Verringerung des Unterschieds eines ersten und zweiten Batteriemoduls (1) hinsichtlich einer Regelgröße so angesteuert, dass ein Gleichspannungswandler (17) so viel elektrische Energie vom Gleichstrombus abführt, dass dadurch eines der beiden Batteriemodule (1) weniger schnell entladen wird als das andere Batteriemodul.

2. Verfahren nach Anspruch 1, wobei die Gleichspannungswandler (17) bidirektional oder unidirektional ausgeführt sind.

3. Verfahren nach einem der vorherigen Ansprüche, umfassend einen der folgenden Schritte:
- Beim Laden des Batterie-Systems werden die Gleichspannungswandler (17) durch die Steuereinrichtung (8) zur Verringerung des Unterschieds eines ersten und zweiten Batteriemoduls (1) hinsichtlich einer Regelgröße so angesteuert, dass ein Gleichspannungswandler (17) so viel elektrische Energie vom Gleichstrombus abführt, dass dadurch eines der beiden Batteriemodule (1) schneller geladen wird als das andere Batteriemodul (1);
- Beim Entladen des Batterie-Systems werden die Gleichspannungswandler (17) durch die Steuereinrichtung (8) zur Verringerung des Unterschieds eines ersten und zweiten Batteriemoduls (1) hinsichtlich einer Regelgröße so angesteuert, dass ein Gleichspannungswandler (17) so viel elektrische Energie auf den Gleichstrombus überträgt, dass dadurch eines der beiden Batteriemodule (1) schneller entladen wird als das andere Batteriemodul (1).

4. Verfahren nach einem der vorherigen Ansprüche, wobei jedes Batteriemodul (1) Hilfssysteme (6) umfasst, welche durch Klemmen von außerhalb des jeweiligen Batteriemoduls (1) mit Strom versorgt werden können, wobei die Klemmen der Hilfssysteme (6) mit dem Gleichstrombus verbunden sind und durch diesen gespeist werden können.

5. Verfahren nach einem der vorherigen Ansprüche, wobei in einem Kalibrierungsschritt Eigenheiten der einzelnen Batteriemodule (1) bestimmt werden, um unterschiedliche Lade- bzw. Entladegeschwindigkeiten für die einzelnen Batteriemodule (1) und Zeitlängen festzulegen, für welche diese unterschiedlichen Geschwindigkeiten zur Anwendung kommen.

6. Verfahren nach einem der vorherigen Ansprüche, wobei das Batterie-System wenigstens eine Messeinrichtung (4, 5) zur Bereitstellung einer Regelgröße für jedes Batteriemodul (1) umfasst, und wobei die Steuereinrichtung (8) so mit der Messeinrichtung verbunden ist, dass sie die Messwerte der Messeinrichtung (4, 5) erfassen kann, und wobei das Verfahren folgende Schritte umfasst:
- Erfassen der Messwerte der Messeinrichtung (4, 5) durch die Steuereinrichtung (8);
- Falls sich in einem ersten Zeitpunkt wenigstens ein Messwert eines ersten Batteriemoduls (1) von einem Messwert eines zweiten Batteriemoduls (1) unterscheidet:
- Durchführung von wenigstens einem in Anspruch 1 oder 3 genannten Schritt, um den Unterschied der Messwerte des ersten und zweiten Batteriemoduls (1) zu einem späteren zweiten Zeitpunkt zu verringern, wobei der Schritt im Zeitraum zwischen dem ersten und zweiten Zeitpunkt durchgeführt wird.

7. Verfahren nach einem der vorherigen Ansprüche, wobei das Batterie-System für jedes Batteriemodul (1) einen ersten Schalter (9) und einen zweiten Schalter (10) umfasst, wobei der erste Schalter (9) jeweils in Serie zu dem zugehörigen Batteriemodul (1) angeordnet ist, und der zweite Schalter (10) jeweils in einer Umgehungsleitung um das zugehörige Batteriemodul (1) und den zugehörigen ersten Schalter (9) angeordnet ist, und wobei die Steuereinrichtung (8) mit jedem der Schalter (9, 10) so verbunden ist, dass dieselbe die jeweilige Schalterstellung bestimmen kann, um die Batteriemodule (1) in die Serien-Schaltung hinein- oder aus der Serien-Schaltung herauszuschalten, wobei das Verfahren den Schritt umfasst:
- Die Steuereinrichtung (8) kontrolliert die Anzahl der Batteriemodule (1), welche sich in der Serienschaltung befinden, um den Unterschied eines ersten und zweiten Batteriemoduls (1) hinsichtlich einer Regelgröße zu verringern, wobei sich über einen Zeitraum während dem Laden bzw. Entladen des Batterie-Systems eines der beiden Batteriemodule (1) weniger lange Zeit in der Serienschaltung befindet als das andere Batteriemodul (1).

8. Redox-Flow-Batterie-System umfassend wenigstens zwei Batteriemodule (1), einen bidirektionalen Umrichter (7) und eine Steuereinrichtung (8), wobei die Batteriemodule (1) in Serie geschaltet und mit dem Umrichter (7) verbunden sind, und wobei jedes Batteriemodul (1) eine Zellanordnung (2) mit einer Vielzahl von Redox-Flow-Zellen und eine Tankeinrichtung (3) zum Speichern von Elektrolyt und zur Versorgung der Zellanordnung (2) mit Elektrolyt umfasst, **dadurch gekennzeichnet, dass** das Batterie-System für jedes Batteriemodul (1) einen Gleichspannungswandler (17) umfasst, wobei jeweils ein Anschluss von jedem Gleichspannungswandler (17) mit jeweils einem Batteriemodul (1) verbunden, und ein zweiter Anschluss von jedem Gleichspannungswandler (17) mit einem gemeinsamen Gleichstrombus verbunden ist, und wobei das Batterie-System einen weiteren Umrichter (16) umfasst, welcher mit dem Gleichstrombus verbunden ist, und wobei die Steuereinrichtung (8) so mit dem weiteren Umrichter (16) und mit den Gleichspannungswandlern (17) verbunden ist, dass die Steuereinrichtung (8) den weiteren Umrichter (16) und die Gleichspannungswandler (17) steuern kann.

9. Redox-Flow-Batterie-System nach dem vorherigen Anspruch, wobei die Gleichspannungswandler (17) bidirektional oder unidirektional ausgeführt sind.

10. Redox-Flow-Batterie-System nach einem der Ansprüche 8 oder 9, wobei jedes Batteriemodul (1) Hilfssysteme (6) umfasst, welche durch Klemmen von außerhalb des jeweiligen Batteriemoduls (1) mit Strom versorgt werden können, wobei die Klemmen der Hilfssysteme (6) mit dem Gleichstrombus verbunden sind und durch diesen gespeist werden können.

11. Redox-Flow-Batterie-System nach dem vorherigen Anspruch, wobei das Batterie-System für jedes Batteriemodul (1) einen ersten Schalter (9) und einen zweiten Schalter (10) umfasst, wobei der erste Schalter (9) jeweils in Serie zu dem zugehörigen Batteriemodul (1) angeordnet ist, und der zweite Schalter (10) jeweils in einer Umgehungsleitung um das zugehörige Batteriemodul (1) und den zugehörigen ersten Schalter (9) angeordnet ist, und wobei die Steuereinrichtung (8) mit jedem der Schalter (9, 10) so verbunden ist, dass dieselbe die jeweilige Schalterstellung bestimmen kann, um die Batteriemodule (1) in die Serien-Schaltung hinein- oder aus der Serien-Schaltung herauszuschalten.

12. Redox-Flow-Batterie-System nach Anspruch 11, wobei die ersten Schalter (9) jeweils zwei normal sperrende MOSFETs umfassen, deren Kanäle so in Serie geschaltet sind, dass in beiden Stromrichtungen immer eine der Reversdioden sperrt, und wobei die zweiten Schalter (10) jeweils ein normal sperrendes MOSFET umfassen.

13. Redox-Flow-Batterie-System nach einem der Ansprüche 8 bis 11, welches eingerichtet ist, die Verfahrensschritte nach einem der Ansprüche 1 bis 7 automatisiert auszuführen.

14. Computerprogramm, umfassend Befehle, die bewirken, dass das Batterie-System des vorangehenden Anspruchs die Verfahrensschritte nach einem der Ansprüche 1 bis 7 ausführt.

15. Computerlesbares Medium, auf dem das Computerprogramm nach dem vorangehenden Anspruch gespeichert ist.

## Claims

1. A method for reducing imbalances occurring during charging and discharging of a redox flow battery system, wherein the battery system comprises at least two battery modules (1), a bidirectional converter (7) and a control device (8), and wherein the battery modules (1) are connected in series and connected to the converter (7), and wherein each battery module (1) comprises a cell arrangement (2) with a plurality of redox flow cells and a tank facility (3) for storing electrolyte and for supplying electrolyte to the cell arrangement (2), **characterized in that** the battery system comprises a DC-DC converter (17) for each battery module (1), wherein one connection of each DC-DC converter (17) is connected to a respective battery module (1), and a second connection of each DC-DC converter (17) is connected to a common DC current bus, and wherein the battery system comprises a further converter (16) which is connected to the DC current bus, and wherein the control device (8) is connected to the further converter (16) and to the DC-DC converters (17) such that the control device (8) can control the further converter (16) and the DC-DC converters (17), and wherein the method comprises at least one of the following steps:
- When charging the battery system, the DC-DC converters (17) are controlled by the control device (8) to reduce the difference of a first and a second battery module (1) with respect to a control variable such that a DC-DC converter (17) transfers so much electrical energy to the DC current bus that thereby one of the two battery modules (1) is charged less quickly than the other battery module (1); -
when discharging the battery system, the DC-DC converters (17) are controlled by the control device (8) to reduce the difference of a first and second battery module (1) with respect to a control variable such that a DC-DC converter (17) discharges so much electrical energy from the DC current bus that thereby one of the two battery modules (1) is discharged less quickly than the other battery module.

2. The method according to claim 1, wherein the DC-DC converters (17) are bidirectional or unidirectional.

3. A method according to any one of the preceding claims, comprising any one of the following steps:
- When charging the battery system, the DC-DC converters (17) are controlled by the control device (8) to reduce the difference of a first and second battery module (1) with respect to a control variable such that a DC-DC converter (17) removes so much electrical energy from the DC current bus that thereby one of the two battery modules (1) is charged faster than the other battery module (1);
- When discharging the battery system, the DC-DC converters (17) are controlled by the control device (8) to reduce the difference of a first and second battery module (1) with respect to a control variable such that a DC-DC converter (17) transfers so much electrical energy to the DC current bus that thereby one of the two battery modules (1) is discharged faster than the other battery module (1).

4. Method according to any of the previous claims, wherein each battery module (1) comprises auxiliary systems (6) which can be powered by terminals from outside the respective battery module (1), the terminals of the auxiliary systems (6) being connected to and powered by the DC current bus.

5. Method according to one of the previous claims, wherein in a calibration step characteristics of the individual battery modules (1) are determined in order to set different charging or discharging rates for the individual battery modules (1) and time lengths for which these different rates are applied.

6. Method according to one of the previous claims, wherein the battery system comprises at least one measuring device (4, 5) for providing a control variable for each battery module (1), and wherein the control device (8) is connected to the measuring device in such a way that it can detect the measured values of the measuring device (4, 5), and wherein the method comprises the following steps: -
detecting the measured values of the measuring device (4, 5) by the control device (8);
- if at least one measured value of a first battery module (1) differs from a measured value of a second battery module (1) at a first point in time:
- performing at least one step mentioned in claim 1 or 3 to reduce the difference of the measured values of the first
and second battery modules (1) at a later second point in time, the step being performed in the period between the first and second points in time.

7. A method according to any one of the preceding claims, wherein the battery system comprises for each battery module (1) a first switch (9) and a second switch (10), the first switch (9) each being arranged in series with the associated battery module (1), and the second switch (10) each being arranged in a bypass circuit around the associated battery module (1) and the associated first switch (9), and wherein the control device (8) is connected to each of the switches (9, 10) so that it can determine the respective switch position to switch the battery modules (1) into or out of the series circuit, the method comprising the step of:
- the control device (8) controls the number of battery modules (1) which are in the series circuit to reduce the difference of a first and second battery module (1) with respect to a control variable, wherein over a period of time during charging or discharging of the battery system, one of the two battery modules (1) is in the series circuit for less time than the other battery module (1).

8. Redox flow battery system comprising at least two battery modules (1), a bidirectional converter (7) and a control device (8), wherein the battery modules (1) are connected in series and connected to the converter (7), and wherein each battery module (1) comprises a cell arrangement (2) with a plurality of redox flow cells and a tank facility (3) for storing electrolyte and for supplying electrolyte to the cell arrangement (2), **characterised in that** the battery system comprises a DC-DC converter (17) for each battery module (1), wherein one connection of each DC-DC converter (17) is connected to a respective battery module (1) and a second connection of each DC-DC converter (17) is connected to a common DC current bus, and wherein the battery system comprises a further converter (16) which is connected to the DC current bus, and wherein the control device (8) is connected to the further converter (16) and to the DC-DC converters (17) in such a way that the control device (8) can control the further converter (16) and the DC-DC converters (17).

9. A redox flow battery system according to the previous claim, wherein the DC-DC converters (17) are bidirectional or unidirectional.

10. A redox flow battery system according to any one of claims 8 or 9, wherein each battery module (1) comprises auxiliary systems (6) which can be powered by terminals from outside the respective battery module (1), the terminals of the auxiliary systems (6) being connected to and powered by the DC current bus.

11. A redox flow battery system according to the previous claim, wherein said battery system comprises for each battery module (1) a first switch (9) and a second switch (10), said first switch (9) each being arranged in series with the associated battery module (1), and the second switch (10) being arranged in a respective bypass line around the associated battery module (1) and the associated first switch (9), and wherein the control device (8) is connected to each of the switches (9, 10) so that it can determine the respective switch position in order to switch the battery modules (1) into or out of the series circuit.

12. The redox flow battery system of claim 11, wherein the first switches (9) each comprise two normal blocking MOSFETs having their channels connected in series such that one of the reverse diodes always blocks in both current directions, and wherein the second switches (10) each comprise one normal blocking MOSFET.

13. A redox flow battery system according to any one of claims 8 to 11, which is arranged to perform the method steps according to any one of claims 1 to 7 in an automated manner.

14. A computer program comprising instructions to cause the battery system of the preceding claim to perform the method steps of any one of claims 1 to 7.

15. A computer-readable medium on which the computer program according to the preceding claim is stored.

## Revendications

1. Procédé pour réduire les déséquilibres qui se produisent pendant le chargement et le déchargement d'un système de batterie à flux redox, dans lequel le système de batterie comprend au moins deux modules de batterie (1), un convertisseur bidirectionnel (7) et un dispositif de commande (8), et dans lequel les modules de batterie (1) sont connectés en série et reliés au convertisseur (7), et dans lequel chaque module de batterie (1) comprend une disposition des cellules (2) comprenant une pluralité de cellules à flux redox et un dispositif de réservoir (3) pour stocker l'électrolyte et pour fournir l'électrolyte à la disposition des cellules (2), **caractérisé en ce que** le système de batterie comprend un convertisseur de tension continue (17) pour chaque module de batterie (1), dans lequel un raccordement de chaque convertisseur de tension continue (17) est relié à un module de batterie (1) respectif, et un deuxième raccordement de chaque convertisseur de tension continue (17) est relié à un bus à courant continu commun, et dans lequel le système de batterie comprend un autre convertisseur (16) qui est relié au bus à courant continu, et dans lequel le dispositif de commande (8) est connecté à l'autre convertisseur (16) et aux convertisseurs de tension continue (17) de telle sorte que le dispositif de commande (8) peut commander l'autre convertisseur (16) et les convertisseurs de tension continue (17), et dans lequel la procédure comprend au moins une des étapes suivantes :
- Lors du chargement du système de batterie, les convertisseurs de tension continue (17) sont commandés par le dispositif de commande (8) pour réduire la différence entre un premier et un deuxième module de batterie (1) en ce qui concerne une variable réglée, de telle sorte qu'un convertisseur de tension continue (17) transfère suffisamment d'énergie électrique sur le bus à courant continu pour que l'un des deux modules de batterie (1) soit ainsi chargé moins rapidement que l'autre module de batterie (1) ; -
Lors de la décharge du système de batterie, les convertisseurs de tension continue (17) sont commandés
par le dispositif de commande (8) pour réduire la différence d'un premier et d'un deuxième module de batterie (1) par rapport à une variable réglée de telle sorte qu'un convertisseur de tension continue (17) transfère suffisamment d'énergie électrique du bus à courant continu pour que l'un des deux modules de batterie (1) soit ainsi déchargé moins rapidement que l'autre module de batterie.

2. Procédure selon la revendication 1, dans laquelle les convertisseurs de tension continue (17) sont réalisés de manière bidirectionnelle ou unidirectionnelle.

3. Procédure selon l'une quelconque des revendications précédentes, comprenant l'une des étapes suivantes :
- Lors du chargement du système de batterie, les convertisseurs de tension continue (17) sont commandés par le dispositif de commande (8) pour réduire la différence entre un premier et un deuxième module de batterie (1) en ce qui concerne une variable réglée, de telle sorte qu'un convertisseur de tension continue (17) évacue du bus à courant continu une quantité d'énergie électrique telle que l'un des deux modules de batterie (1) est ainsi chargé plus rapidement que l'autre module de batterie (1) ;
- Lors de la décharge du système de batterie, les convertisseurs de tension continue (17) sont commandés par le dispositif de commande (8) pour réduire la différence entre un premier et un deuxième module de batterie (1) en ce qui concerne une variable réglée, de telle sorte qu'un convertisseur de tension continue (17) transfère suffisamment d'énergie électrique sur le bus à courant continu pour que l'un des deux modules de batterie (1) soit ainsi déchargé plus rapidement que l'autre module de batterie (1).

4. Procédé selon l'une quelconque des revendications précédentes, dans lequel chaque module de batterie (1) comprend des systèmes auxiliaires (6) qui peuvent être alimentés par des bornes depuis l'extérieur du module de batterie (1) respectif, les bornes des systèmes auxiliaires (6) étant connectées au bus à courant continu et pouvant être alimentées par celui-ci.

5. Procédé selon l'une quelconque des revendications précédentes, dans lequel, lors d'une étape d'étalonnage, des caractéristiques propres à chaque module de batterie (1) sont déterminées afin de définir des vitesses de chargement ou de déchargement différentes pour chaque module de batterie (1) et des durées pour lesquelles ces vitesses différentes sont appliquées.

6. Procédé selon l'une quelconque des revendications précédentes, dans lequel le système de batterie comprend au moins un dispositif de mesure (4, 5) pour fournir une variable réglée pour chaque module de batterie (1), et dans lequel le dispositif de commande (8) est connecté au dispositif de mesure de manière à pouvoir acquérir les valeurs de mesure du dispositif de mesure (4, 5), et dans lequel la procédure comprend les étapes suivantes : -
acquisition des valeurs de mesure du dispositif de mesure (4, 5) par le dispositif de commande (8) ;
- si, à un premier instant, au moins une valeur de mesure d'un premier module de batterie (1) diffère d'une valeur de mesure d'un deuxième module de batterie (1) :
- exécution d'au moins une étape mentionnée dans la revendication 1 ou 3 pour réduire la différence entre les valeurs de mesure des premier et deuxième modules de batterie (1) à un deuxième instant ultérieur, l'étape étant exécutée dans l'intervalle de temps entre le premier et le deuxième instant.

7. Procédé selon l'une quelconque des revendications précédentes, dans lequel le système de batterie comprend, pour chaque module de batterie (1), un premier interrupteur (9) et un deuxième interrupteur (10), le premier interrupteur (9) étant disposé respectivement en série avec le module de batterie (1) associé, et le deuxième interrupteur (10) étant disposé respectivement dans une ligne de dérivation autour du module de batterie (1) associé et du premier interrupteur (9) associé, et dans lequel le dispositif de commande (8) est connecté à chacun des interrupteurs (9, 10) de manière à pouvoir déterminer la position respective des interrupteurs afin de connecter les modules de batterie (1) au circuit série ou de les déconnecter du circuit série, la procédure comprenant l'étape consistant à :
- Le dispositif de commande (8) contrôle le nombre de modules de batterie (1) qui se trouvent dans le circuit en série afin de réduire la différence entre un premier et un deuxième module de batterie (1) en ce qui concerne une variable réglée, l'un des deux modules de batterie (1) se trouvant dans le circuit en série moins longtemps que l'autre module de batterie (1) sur une période de temps pendant le chargement ou le déchargement du système de batterie.

8. Système de batterie à flux redox comprenant au moins deux modules de batterie (1), un convertisseur bidirectionnel (7) et un dispositif de commande (8), dans lequel les modules de batterie (1) sont connectés en série et reliés au convertisseur (7), et dans lequel chaque module de batterie (1) comprend une disposition des cellules (2) comprenant une pluralité de cellules à flux redox et un dispositif de réservoir (3) pour stocker l'électrolyte et pour fournir l'électrolyte à la disposition des cellules (2), **caractérisé en ce que** le système de batterie comprend un convertisseur de tension continue (17) pour chaque module de batterie (1), dans lequel un raccordement de chaque convertisseur de tension continue (17) est connecté à un module de batterie (1) respectif, et un deuxième raccordement de chaque convertisseur de tension continue (17) est connecté à un bus à courant continu commun, et dans lequel le système de batterie comprend un autre convertisseur (16) qui est connecté au bus à courant continu, et dans lequel le dispositif de commande (8) est connecté à l'autre convertisseur (16) et aux convertisseurs de tension continue (17) de telle sorte que le dispositif de commande (8) peut commander l'autre convertisseur (16) et les convertisseurs de tension continue (17).

9. Système de batterie à flux redox selon la revendication précédente, dans lequel les convertisseurs de tension continue (17) sont bidirectionnels ou unidirectionnels.

10. Système de batterie à flux redox selon l'une des revendications 8 ou 9, dans lequel chaque module de batterie (1) comprend des systèmes auxiliaires (6) qui peuvent être alimentés par des bornes depuis l'extérieur du module de batterie (1) respectif, les bornes des systèmes auxiliaires (6) étant connectées au bus à courant continu et pouvant être alimentées par celui-ci.

11. Système de batterie à flux redox selon la revendication précédente, dans lequel le système de batterie comprend, pour chaque module de batterie (1), un premier interrupteur (9) et un deuxième interrupteur (10), le premier interrupteur (9) étant respectivement disposé en série avec le module de batterie (1) associé, et le deuxième interrupteur (10) est respectivement disposé en dérivation autour du module de batterie associé (1) et du premier interrupteur associé (9), et dans lequel le dispositif de commande (8) est connecté à chacun des interrupteurs (9, 10) de manière à pouvoir déterminer la position respective de l'interrupteur pour commuter les modules de batterie (1) dans le circuit en série ou hors du circuit en série.

12. Système de batterie à flux redox selon la revendication 11, dans lequel les premiers interrupteurs (9) comprennent chacun deux MOSFET à blocage normal dont les canaux sont connectés en série de telle sorte que dans les deux sens du courant, l'une des diodes réversibles est toujours bloquée, et dans lequel les deuxièmes interrupteurs (10) comprennent chacun un MOSFET à blocage normal.

13. Système de batterie à flux redox selon l'une quelconque des revendications 8 à 11, qui est adapté pour exécuter de manière automatisée les étapes de la procédure selon l'une quelconque des revendications 1 à 7.

14. Programme informatique comprenant des instructions pour que le système de batterie de la revendication précédente exécute les étapes de la procédure selon l'une quelconque des revendications 1 à 7.

15. Support lisible par ordinateur sur lequel est stocké le programme d'ordinateur selon la revendication précédente.
